# EUROPÄISCHE PATENTANMELDUNG

(11) **EP 1 671 822 A1**
(43) Veröffentlichungstag der Anmeldung: **21.06.2006**
(21) Anmeldenummer: 05020534.3
(22) Anmeldetag: 21.09.2005
(51) Int. Cl.: B60G 15/14, F16F 9/04

(54) **Luftfeder und Verfahren zur Abdichtung einer Luftfeder**

(30) Priorität: 17.12.2004 DE 102004060727
(71) Anmelder: Carl Freudenberg KG, 69465 Weinheim (DE)
(72) Erfinder: Berg, Jürgen, 22885 Barsbüttel (DE); Poeschel, Knut, 22299 Hamburg (DE)
(74) Vertreter: Ripper, Monika Sigrid

(57) **Zusammenfassung**

Eine Luftfeder (1), umfassend ein Federlager (2) und/ oder ein Dämpferlager (3), wobei das Federlager (2) und/ oder das Dämpferlager (3) jeweils mindestens ein Element (2a, 3a) umfasst, welches als Federung fungiert und einen gasgefüllten Raum (4) begrenzt, ist im Hinblick auf die Aufgabe, eine Luftfeder zu realisieren, welche einen optimalen Betrieb gewährleistet, dadurch gekennzeichnet, dass dem Element (2a, 3a) abdichtende Mittel (5, 6) zugeordnet sind. Des Weiteren ist ein Verfahren zur Abdichtung einer Luftfeder (1) angegeben, wobei mindestens ein Element (2a, 3a) des Federlagers (2) und/ oder des Dämpferlagers (3) an der Oberfläche aufgerauht wird, wobei abdichtende Mittel (5, 6) durch Fluorierung oder Plasmaaktivierung aktiviert werden und wobei die abdichtenden Mittel (5, 6) mit mindestens einem Element (2a, 3a) verklebt werden.

## Beschreibung

### Technisches Gebiet

Die Erfindung betrifft eine Luftfeder, umfassend ein Federlager und/oder ein Dämpferlager, wobei das Federlager und/oder das Dämpferlager jeweils mindestens ein Element umfasst, welches als Federung fungiert und einen gasgefüllten Raum begrenzt. Die Erfindung betrifft des Weiteren ein Verfahren zur Abdichtung einer Luftfeder, wobei mindestens ein Element des Federlagers und/ oder des Dämpferlagers an der Oberfläche aufgerauht wird, wobei abdichtende Mittel durch Fluorierung oder Plasmaaktivierung aktiviert werden und wobei die abdichtenden Mittel mit mindestens einem Element verklebt werden.

### Stand der Technik

Luftfedern der eingangs genannten Art sind aus dem Stand der Technik bereits bekannt. Dämpferlager und Federlager dienen zusätzlich zum Luftvolumen, welches üblicherweise in einem Federbalg eingeschlossen ist, der Dämpfung von Schwingungen. Das Federlager ist häufig an Nahtstellen einer Luftfeder angeordnet, wobei sie einerseits einem gasgefüllten Raum zugewandt sind und andererseits der Umgebung. Das Gleiche gilt für Dämpferlager. Dämpferlager sind überdies häufig gänzlich in einem druckbefüllten Raum eingeschlossen, wodurch ihre Steifigkeit durch den Druck innerhalb des Raumes beeinflusst wird.

Nachteilig bei den Luftfedern des Standes der Technik ist, dass die Dämpferlager und Federlager funktionsbedingt aus Materialien gefertigt sind, welche entweder Gase aufnehmen oder passieren lassen. Auf Grund dieser konstruktiven Eigenschaften der Dämpferlager und Federlager ist ein Betrieb der gattungsbildenden Luftfedern mit konstanten Federungseigenschaften nicht möglich.

### Darstellung der Erfindung

Der Erfindung liegt daher die Aufgabe zu Grunde eine Luftfeder der eingangs genannten Art derart auszugestalten und weiter zu bilden, dass stets ein optimaler Betrieb der Luftfeder gewährleistet ist.

Erfindungsgemäß wird die voranstehende Aufgabe hinsichtlich einer Luftfeder mit den Merkmalen des Patentanspruchs 1 gelöst. Danach ist eine Luftfeder dadurch gekennzeichnet, dass dem Element abdichtende Mittel zugeordnet sind.

Erfindungsgemäß ist erkannt worden, dass Federlager und/ oder Dämpferlager Elemente umfassen, welche durch die Aufnahme von Gasen im Hinblick auf ihre Funktion nachteilig beeinflusst werden. Darüber hinaus ist erkannt worden, dass diese Elemente Gase entweichen lassen und insoweit keine konstanten Druckverhältnisse innerhalb der Luftfeder gewährleisten können. Die Vorkehrung von abdichtenden Mitteln, welche direkt den Elementen zugeordnet sind, löst die genannten Probleme. Erfindungsgemäß ist insbesondere erkannt worden, dass abdichtende Mittel an den Elementen selektiv die Schwachstellen gattungsbildender Luftfedern beseitigen. Erfindungsgemäß ist erkannt worden, dass abdichtende Mittel verhindern, dass Gase in die Elemente eindringen und somit deren Steifigkeit beeinflussen. Schließlich ist erkannt worden, dass abdichtende Mittel verhindern, dass Gase durch die Elemente hindurch diffundieren können. Insoweit ist gewährleistet, dass sowohl das Federlager als auch das Dämpferlager den Betrieb der Luftfeder nicht nachträglich beeinflussen. Folglich ist ein einwandfreier Betrieb der Luftfeder realisierbar und die eingangs genannte Aufgabe durch die Merkmale des Patentanspruchs 1 gelöst.

In vorteilhafter Weise könnte mindestens ein Element als Elastomer ausgebildet sein. Diese konkrete Ausgestaltung ermöglicht die Verwendung eines Elements, welches elastische Eigenschaften aufweist. Hierdurch ist die Dämpfungscharakteristik der Luftfeder in Abhängigkeit von den elastischen Eigenschaften des verwendeten Elastomers einstellbar.

Mindestens ein Element könnte als Polyurethanschaum ausgebildet sein. Polyurethanschaum ist im Hinblick auf seine Produkteigenschaften gut erforscht und ist kommerziell in einfacher Weise erhältlich. Insoweit ist eine Produktion von Luftfedern bei Verwendung von Polyurethanschaum besonders kostengünstig realisierbar.

Die abdichtenden Mittel könnten ein Elastomer umfassen. Diese konkrete Ausgestaltung erlaubt den abdichtenden Mitteln zusammen mit dem Element als Federung zu fungieren. Dabei ist vorteilhaft, dass ein Verbund aus einem Elastomer und einem elastischen Element als zusammen gesetzte Feder fungiert, deren Federsteifigkeit problemlos einstellbar ist.

Die abdichtenden Mittel könnten thermoplastisches Polyurethan umfassen. Die Verwendung von thermoplastischem Polyurethan erlaubt die Aufbringung der abdichtenden Mittel durch Spritzguss oder Kartuschenapplikaltion. Bei diesem Verfahren des Aufbringens der abdichtenden Mittel ist es möglich, die abdichtenden Mittel an Überstände und abragende Strukturen problemlos anzufügen, da das thermoplastische Polyurethan auf Grund seiner Viskositätseigenschaften besonders gut fließfähig ist.

Eine besonders feste Verbindung der abdichtenden Mittel mit dem Element könnte durch einen Klebeprozess erzielt werden. Dabei ist insbesondere denkbar, dass die abdichtenden Mittel durch einen Ein-Komponenten-Polyurethan-Klebstoff auf die Elemente aufgeklebt sind. Ganz konkret ist denkbar, dass ein Federlager aus Microcellular-Urethan (MCU) -Schaum oder Polyurethanschaum durch einen Klebeprozess mit einem Elastomer verbunden wird. Hierbei fungiert das Elastomer als abdichtendes Mittel und der MCU-Schaum oder der Polyurethanschaum als federndes Element des Federlagers. Des Weiteren ist denkbar, dass ein Dämpferlager aus MCU-Schaum oder Polyurethanschaum mit einem Elastomer verklebt wird.

Die abdichtenden Mittel könnten als Schrumpffolie ausgebildet sein. Diese konkrete Ausgestaltung ermöglicht, dass das Element durch die abdichtenden Mittel unter geringer Kraftbeaufschlagung eingeschlossen werden kann. Die Vorkehrung einer Schrumpffolie als abdichtende Mittel ermöglicht ein gasdichtes Abdichten durch Aufschrumpfen der Folie oder Aufschmelzen der Folie. Hierbei kann diese aus thermoplastischem Polyurethan gefertigt sein. Das Aufschrumpfen könnte auch durch Erwärmung der Folie über den Schmelzpunkt des thermoplastischen Polyurethans durch ein Heißluftgebläse, einen Ofen oder durch einen Heizstrahler erfolgen.

Die abdichtenden Mittel könnten aufgespritzt sein. Ganz konkret ist hierbei denkbar, dass die abdichtenden Mittel durch Spritzguss oder durch eine Kartusche auf das Element aufgespritzt werden. Das Aufspritzen der abdichtenden Mittel erlaubt das Eindringen der abdichtenden Mittel in feine Spalte und Zwischenräume. Insoweit ist eine besonders zuverlässige Abdichtung realisierbar.

Die abdichtenden Mittel könnten eine Wandstärke von 2 mm aufweisen. Dabei ist insbesondere denkbar, dass ein Ethylen-Propylen-Dien-Kautschuk (EPDM)-Elastomer der Wandstärke 2,0 mm als abdichtendes Mittel verwendet wird. Hierbei steht EPDM für ein Polymerisat aus Ethylen, Propylen und einem geringen Anteil eines Diens. Dieses Elastomer könnte mit einem EinKomponenten-Polyurethan-Klebstoff mit einem Element aus Polyurethan verklebt werden. Dieses Verbindungsverfahren zur Abdichtung einer Luftfeder könnte in mehreren Schritten erfolgen. Zunächst könnte eine mechanische Aufrauhung der Oberfläche des Polyurethan-Elements erfolgen. Darauf hin könnte das Elastomer mittels Fluorierung oder Plasmaaktivierung aktiviert werden. Schließlich könnte ein Verkleben von Elastomer und Polyurethan-Element sowie gegebenenfalls einem weiteren Bauteil, beispielsweise aus Metall, erfolgen. Die Verwendung eines Elastomers der Wandstärke 2,0 mm hat sich als besonders vorteilhaft erwiesen, da die Wandstärke von 2 mm eine ausreichende Dichtigkeit bei ausreichender Stabilität der abdichtenden Mittel gewährleistet. Problematisch bei der Abdichtung von Federlagern oder Dämpferlagern ist nämlich, dass diese im Betrieb mit Kräften beaufschlagt werden, welche die abdichtenden Mittel nachteilig beeinflussen können. Insoweit ist es erforderlich, dass die abdichtenden Mittel eine Mindestwandstärke aufweisen, um diesen Kräften Stand zu halten.

Sowohl das Federlager als auch das Dämpferlager einer Luftfeder könnten einseitig oder beidseitig mit den abdichtenden Mittel abgedichtet werden. Ganz in Abhängigkeit von den Anforderungen an die Steifigkeit des Dämpferlagers und/ oder des Federlagers kann eine einseitige oder beidseitige Abdichtung von Vorteil sein.

Alle Ausführungen, welche in Bezug auf die zu verwendenden Materialien für die als Federung fungierenden Elemente oder die abdichtenden Mittel gemacht wurden, sind nicht als auf diese Materialien einschränkend zu verstehen. Ganz im Gegenteil ist denkbar, dass in einer Luftfeder mehrere Elemente aus verschiedenen Materialien vorgesehen sind, welche mit abdichtenden Mitteln aus verschiedenen Materialien versehen sind. Dabei können alle Materialien, die für die Elemente verwendet werden, auch für die abdichtenden Mittel verwendet werden. Insoweit sind alle Materialkombinationen denkbar.

Des Weiteren ist die eingangs genannte Aufgabe im Hinblick auf ein Verfahren zur Abdichtung einer Luftfeder mit den Merkmalen des Patentanspruchs 11 gelöst. Danach ist ein Verfahren zur Abdichtung einer Luftfeder derart ausgestaltet, dass mindestens ein Element des Federlagers und/ oder des Dämpferlagers an der Oberfläche aufgerauht wird, dass die abdichtenden Mittel durch Fluorierung oder Plasmaaktivierung aktiviert werden und dass die abdichtenden Mittel mit mindestens einem Element verklebt werden. Um Wiederholungen zu vermeiden, sei in Bezug auf die erfinderische Tätigkeit auf die Ausführungen zur Luftfeder als solcher verwiesen.

Es gibt nun verschiedene Möglichkeiten, die Lehre der vorliegenden Erfindung in vorteilhafter Weise auszugestalten und weiter zu bilden. Dazu ist einerseits auf die nachgeordneten Ansprüche, andererseits auf die nachfolgende Erläuterung bevorzugter Ausführungsbeispiele der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittzeichnung eine Luftfeder mit einem Dämpferlager und einem Federlager, welche mit abdichtenden Mitteln versehen sind,
- Fig. 2: ein Dämpferlager mit aufgeklebtem Elastomer,
- Fig. 3: ein Dämpferlager, welches mit einer Schrumpffolie abgedichtet ist,
- Fig. 4: ein Federlager mit aufgeklebtem Elastomer und
- Fig. 5: ein Federlager, welches durch eine Schrumpffolie abgedichtet ist.

### Ausführung der Erfindung

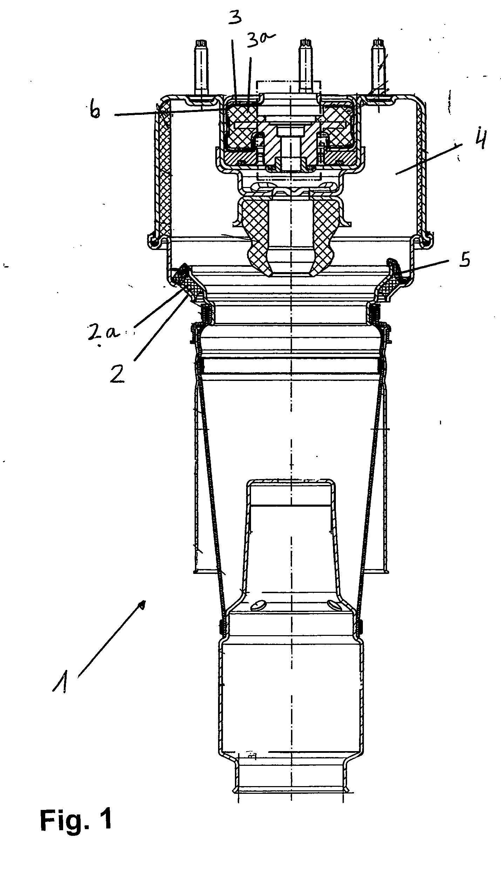

Fig. 1 zeigt eine Luftfeder 1 mit einem Federlager 2 und einem Dämpferlager 3. Das Federlager umfasst ein Element 2a, welches als Federung fungiert. Das Dämpferlager 3 umfasst ein Element 3a, welches als Federung fungiert. Beide Elemente begrenzen einen gasgefüllten Raum 4. Sowohl dem Element 2a als auch dem Element 3a sind abdichtende Mittel 5, 6 zugeordnet.

Die Elemente 2a und 3a sind aus Polyurethan gefertigt. Die abdichtenden Mittel 5, 6 sind als Elastomer ausgebildet. Die abdichtenden Mittel 5, 6 sind auf die Elemente 2a, 3a aus Polyurethan aufgeklebt.

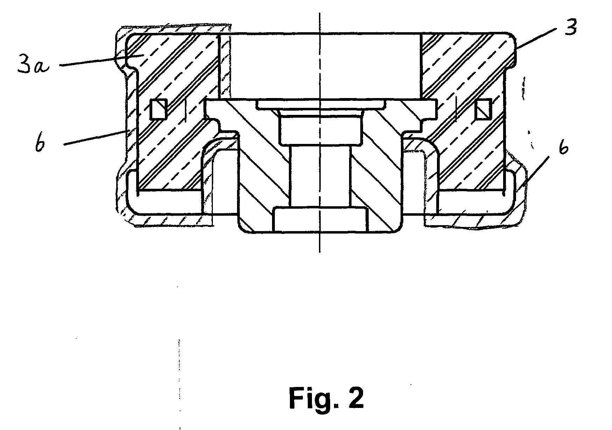

Fig. 2 zeigt ein Dämpferlager 3 mit einem Element 3a. Auf das Element 3a ist als abdichtendes Mittel 6 ein Elastomer aufgeklebt. Das Element 3a ist aus MCU-Schaum oder Polyurethanschaum gefertigt. Auf der linken Seite des Dämpferlagers ist das abdichtende Mittel 6 derart am Element 3a angeordnet, dass eine beidseitige Abdichtung des Dämpferlagers erfolgt. Auf der rechten Seite des Dämpferlagers 3 ist das abdichtende Mittel 6 derart am Element 3a angeordnet, dass eine einseitige Abdichtung des Dämpferlagers erfolgt.

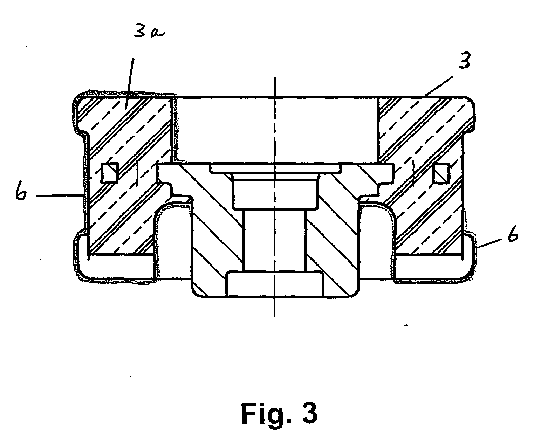

Fig. 3 zeigt ein Dämpferlager 3 mit einem Element 3a, auf welches als abdichtendes Mittel 6 eine Schrumpffolie aufgebracht ist. Die linke Seite des Dämpferlagers 3 ist beidseitig durch die Schrumpffolie abgedichtet, die rechte Seite lediglich einseitig.

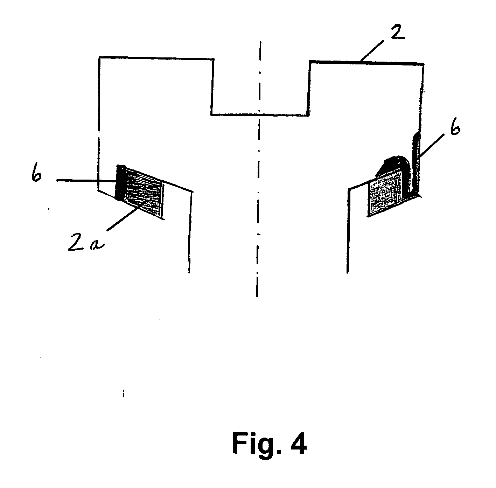

Fig. 4 zeigt ein Federlager 2, welches ein Element 2a aus Polyurethan umfasst. Auf das Element 2a ist als abdichtendes Mittel 6 ein Elastomer aufgeklebt.

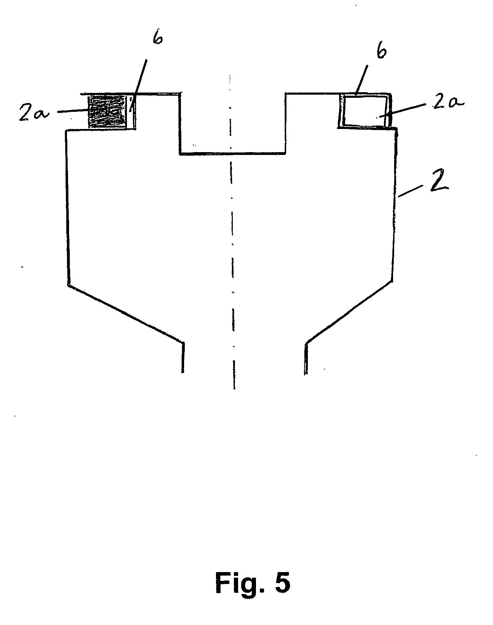

Fig. 5 zeigt ein Federlager 2, welches ein Element 2a umfasst, das aus Polyurethan gefertigt ist. Die linke Seite der Fig. 5 zeigt, dass als abdichtendes Mittel 6 ein Elastomer fungiert, welches auf das Element 2a aufgeklebt ist. die rechte Seite der Fig. 5 zeigt ein abdichtendes Mittel 6, welches als Schrumpffolie ausgebildet ist und am Element 2a anliegt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Luftfeder (1), umfassend ein Federlager (2) und/ oder ein Dämpferlager (3), wobei das Federlager (2) und/ oder das Dämpferlager (3) jeweils mindestens ein Element (2a, 3a) umfasst, welches als Federung fungiert und einen gasgefüllten Raum (4) begrenzt,
**dadurch gekennzeichnet, dass** dem Element (2a, 3a) abdichtende Mittel (5, 6) zugeordnet sind.

2. Luftfeder nach Anspruch 1, **dadurch gekennzeichnet, dass** mindestens ein Element (2a, 3a) als Elastomer ausgebildet ist.

3. Luftfeder nach Anspruch 1 oder 2, **dadurch gekennzeichnet, dass** mindestens ein Element (2a, 3a) als Polyurethanschaum ausgebildet ist.

4. Luftfeder nach einem der Ansprüche 1 bis 3, **dadurch gekennzeichnet, dass** die abdichtenden Mittel (5, 6) ein Elastomer umfassen.

5. Luftfeder nach einem der Ansprüche 1 bis 4, **dadurch gekennzeichnet, dass** die abdichtenden Mittel (5, 6) thermoplastisches Polyurethan umfassen.

6. Luftfeder nach einem der Ansprüche 1 bis 5, **dadurch gekennzeichnet, dass** die abdichtenden Mittel (5, 6) aufgeklebt sind.

7. Luftfeder nach Anspruch 6, **dadurch gekennzeichnet, dass** die abdichtenden Mittel (5, 6) durch einen Ein-Komponenten-Polyurethanklebstoff aufgeklebt sind.

8. Luftfeder nach einem der Ansprüche 1 bis 5, **dadurch gekennzeichnet, dass** die abdichtenden Mittel (5, 6) als Schrumpffolie ausgebildet sind.

9. Luftfeder nach einem der Ansprüche 1 bis 5, **dadurch gekennzeichnet, dass** die abdichtenden Mittel (5, 6) aufgespritzt sind.

10. Luftfeder nach einem der Ansprüche 1 bis 9, **dadurch gekennzeichnet, dass** die abdichtenden Mittel (5, 6) eine Wandstärke von 2 mm aufweisen.

11. Verfahren zur Abdichtung einer Luftfeder (1), insbesondere nach einem der Ansprüche 1 bis 10, wobei mindestens ein Element (2a, 3a) des Federlagers (2) und/ oder des Dämpferlagers (3) an der Oberfläche aufgerauht wird, wobei abdichtende Mittel (5, 6) durch Fluorierung oder Plasmaaktivierung aktiviert werden und wobei die abdichtenden Mittel (5, 6) mit mindestens einem Element (2a, 3a) verklebt werden.
